# EUROPÄISCHE PATENTSCHRIFT

(11) **EP 3 402 725 B1**
(45) Veröffentlichungstag und Bekanntmachung des Hinweises auf die Patenterteilung: **26.06.2019**
(21) Anmeldenummer: 17700334.0
(22) Anmeldetag: 12.01.2017
(51) Int. Cl.: B65D 47/18

(54) **TROPFEREINSATZ ZUR TROPFENFÖRMIGEN APPLIKATION EINER IN EINEM BEHÄLTER BEVORRATETEN FLÜSSIGKEIT**
DROPPER INSERT FOR THE APPLICATION OF A LIQUID STORED IN A CONTAINER
INSERT COMPTE-GOUTTES POUR L'APPLICATION SOUS FORME DE GOUTTES D'UN LIQUIDE STOCKÉ DANS UN RÉCIPIENT

(30) Priorität: 13.01.2016 DE 102016100516
(43) Veröffentlichungstag der Anmeldung: 21.11.2018
(73) Patentinhaber: Kulzer GmbH, 63450 Hanau (DE)
(72) Erfinder: SUFFEL, Ralf, 58239 Schwerte (DE); KASTRATI, Astrit, 61206 Wöllstadt (DE)
(74) Vertreter: Bendele, Tanja
(86) Internationale Anmeldenummer: PCT/EP2017/050531
(87) Internationale Veröffentlichungsnummer: WO 2017/121779

(56) Entgegenhaltungen:
- DE-A1-102006 005 608

## Beschreibung

Die Erfindung betrifft einen Tropfereinsatz zur tropfenförmigen Applikation einer Flüssigkeit, die in einem Behälter bevorratet ist. Der Tropfereinsatz ist hierzu mit dem Behälter verbindbar. Bei der Flüssigkeit handelt es sich insbesondere um eine Flüssigkeit für den dentalen Bereich bzw. eine Dentalflüssigkeit, vorzugsweise um ein Dentaladhäsiv. Bei der tropfenförmigen Applikation gilt es eine exakte Tropfenbildung und ein sauberes Abtropfen der Flüssigkeit zu gewährleisten, um die Dosiergenauigkeit zu erhöhen sowie Verunreinigungen des Tropfereinsatzes und/oder des mit dem Tropfereinsatz verbundenen Behälters zu vermeiden.

Aus der DE 10 2006 005 608 A1 ist bereits ein Tropfereinsatz für ein Behältnis mit einer im dentalen Bereich in Tropfenform bereitzustellenden Flüssigkeit bekannt, der bei bestimmungsgemäßer Anwendung eine Verschmutzung und damit ein Verkleben des Behältnisses durch hängenbleibende und außenseitig ablaufende Tropfen verhindert. Der bekannte Tropfereinsatz weist einen Tropfkanal auf, der mehrere rohrförmige Abschnitte und einen trichterförmigen Ausgangsabschnitt umfasst, wobei ein unmittelbar an den trichterförmigen Ausgangsabschnitt anschließender rohrförmiger Abschnitt als Verjüngung oder Blende ausgebildet ist. Das dem trichterförmigen Ausgangsabschnitt abgewandte Ende dient der Verbindung des Tropfereinsatzes mit dem Behältnis.

Zur tropfenförmigen Applikation der im Behältnis bevorrateten Flüssigkeit wird gemäß der DE 10 2006 005 608 A1 das Behältnis einschließlich Tropfereinsatz in Schräglage gebracht, so dass die Flüssigkeit aus dem Behältnis in den Tropfkanal gelangt und schließlich über eine den trichterförmigen Ausgangsabschnitt des Tropfkanals begrenzenden ringförmigen Stirnfläche des Tropfereinsatzes abtropft. Die ringförmige Stirnfläche ist abgeflacht ausgebildet, da eine abgeflachte Stirnfläche im Vergleich zu einer gerundeten Stirnfläche weniger leicht umflossen werden kann. Die abgeflachte Ausführung fördert somit ein sauberes Abtropfen der Flüssigkeit. Bleibt dennoch einmal ein Tropfen hängen und läuft außenseitig am Tropfereinsatz ab, wird er in einer umlaufenden Überlaufrinne am Ende eines säulenförmigen Tropferrüssels, in dem der Tropfkanal ausgebildet ist, aufgefangen. Aus dem Dentalbereich sind Flüssigkeiten bekannt, die - insbesondere in Kontakt mit Luft - zur Ausbildung einer Haut neigen. Dies ist beispielsweise bei acetonhaltigen Flüssigkeiten der Fall. Wird eine solche Flüssigkeit in einem Behälter mit einem Tropfereinsatz zur tropfenförmigen Applikation der Flüssigkeit bevorratet, kann sich nach dem ersten Gebrauch eine Haut bilden, die bei einer Erwärmung der Flüssigkeit, beispielsweise durch die Handwärme, in den Tropfkanal des Tropfereinsatzes aufsteigt und am Ausgang des Tropfkanals eine flüssigkeitsgefüllte Blase bildet. Platzt die Blase am Ausgang des Tropfkanals kann dies zu einer Verunreinigung des Tropfereinsatzes führen, die eine exakte Tropfenbildung und ein sauberes Abtropfen der Flüssigkeit nachfolgend verhindert. Über den Tropfkanal in den Behälter zurückfließende Flüssigkeit kann ferner zu einer Verunreinigung des Gebindes führen.

Der Haut- und Blasenbildungsprozess einer im Behälter bevorrateten dentalen Flüssigkeit wird auch "Nachkocheffekt" genannt. Zumindest die damit einhergehenden unerwünschten Auswirkungen gilt es zu mindern bzw. zu beseitigen. Aufgabe der Erfindung ist es die Blasenbildung zu vermeiden bzw. gebildete Blasen oder eine Haut bereits vor der Tropfenbildung oder dem Austritt der Flüssigkeit aus dem Tropfkanal zu zerstören.
Zur Lösung der Aufgabe wird der Tropfereinsatz mit den Merkmalen des Anspruchs 1 vorgeschlagen. Vorteilhafte Ausgestaltungen der Erfindung sind den Unteransprüchen sowie detailliert der Beschreibung zu entnehmen.

Der zur tropfenförmigen Applikation einer in einem Behälter bevorrateten Flüssigkeit, insbesondere einer dentalen Flüssigkeit, bevorzugt einer Aceton oder Ethanol enthaltenden Flüssigkeit, vorgeschlagene Tropfereinsatz umfasst einen Körper, der im Wesentlichen rotationssymmetrisch ausgebildet und in axialer Richtung von einem Kanal durchsetzt ist. Der Kanal definiert einen Einlass und einen Auslass für die Flüssigkeit. Erfindungsgemäß weist eine den Kanal begrenzende Innenumfangsfläche des Körpers mindestens einen in den Kanal hineinragenden und in einer Spitze endenden Dorn auf.

Die endseitig ausgebildete Spitze des Dorns vermag eine im Kanal aufsteigende Haut, die beispielsweise eine acetonhaltige Flüssigkeit bildet, zu durchstoßen und/oder zu zerreißen, so dass es nicht zu einer Blasenbildung im Bereich des Auslasses kommt. Folglich kann auch keine Blase im Bereich des Auslasses platzen und zu den unerwünschten Verunreinigungen führen. Die negativen Auswirkungen des Nachkocheffekts werden auf diese Weise gemindert bzw. beseitigt.

Der in den Kanal hineinragende Dorn hat zudem die Wirkung, dass die durchstoßene und/oder zerrissene Haut ganz oder zumindest in Teilen zurückgehalten wird, so dass diese nicht in den Bereich des Auslasses gelangt. Dadurch ist weiterhin eine exakte Tropfenbildung möglich.

Der den Einlass und den Auslass definierende Kanal des Tropfereinsatzes ist vorzugsweise in mehrere Abschnitte unterteilt. Diese unterscheiden sich insbesondere hinsichtlich ihrer Durchmesser, wobei der Durchmesser eines Abschnitts variieren kann, um beispielsweise einen sich verjüngenden oder erweiternden Kanalabschnitt auszubilden. Über die konkrete Ausgestaltung der mehreren aufeinanderfolgenden Kanalabschnitte kann Einfluss auf das Fließverhalten der zu applizierenden Flüssigkeit genommen werden. Über die Form des auslassseitigen Endabschnitts des Kanals kann zudem die Tropfenbildung gesteuert werden.

Die den mindestens einen Dorn aufweisende Innenumfangsfläche des Körpers begrenzt vorzugsweise einen Abschnitt des Kanals, an den sich in Richtung des Auslasses mindestens ein weiterer Abschnitt anschließt. Der Dorn ist demnach in einem gewissen axialen Abstand zum Auslass angeordnet, so dass sichergestellt ist, dass die durch den Dorn festgehaltene Haut oder festgehaltenen Hautteile nicht in den Bereich des Auslasses gelangt bzw. gelangen. Dadurch ist zugleich sichergestellt, dass die Tropfenbildung im Bereich des Auslasses durch die Haut oder durch Hautteile nicht behindert wird.

Ferner wird vorgeschlagen, dass sich der Kanalabschnitt, der durch die den Dorn aufweisende Innenumfangsfläche des Körpers begrenzt wird, in Richtung des Auslasses verjüngt. Vorzugsweise ist dieser Kanalabschnitt konisch geformt. Das heißt, dass sein Durchmesser kontinuierlich in Richtung des Auslasses abnimmt. Der konisch geformte bzw. sich verjüngende Kanalabschnitt optimiert das Fließverhalten der Flüssigkeit in Richtung des Auslasses.

Alternativ oder ergänzend wird vorgeschlagen, dass der Kanalabschnitt, der durch die den Dorn aufweisende Innenumfangsfläche des Körpers begrenzt wird, mittelbar über mindestens einen weiteren Abschnitt, der einen verringerten Durchmesser besitzt, in einen den Auslass definierenden Abschnitt des Kanals übergeht. Die Verjüngung des Kanals in Richtung des Auslasses kann demnach auch durch den weiteren Abschnitt bewirkt werden, der aufgrund des verringerten Durchmessers eine Art Blende ausbildet. Die Verjüngung bzw. Blende über den weiteren Abschnitt erleichtert eine genaue Dosierung bzw. Abmessung der Flüssigkeit. Der weitere Abschnitt ist vorzugsweise im Wesentlichen zylindrisch ausgebildet. An den weiteren Abschnitt schließt sich vorzugsweise unmittelbar der den Auslass definierende Abschnitt des Kanals an, der sich weiterhin vorzugsweise in Richtung des Auslasses trichterförmig erweitert. Die Trichterform des auslassseitigen Endabschnitts des Kanals fördert die Tropfenbildung am Auslass. Der Innenwinkel des trichterförmigen Auslasses ist vorzugsweise eine stumpfer Winkel, bevorzugt beträgt der Winkel 90 bis 180°, vorzugsweise 90 bis 170°.

Bevorzugt weist der Dorn eine Längsachse A auf, die gegenüber der Innenumfangsfläche des Körpers geneigt ist, so dass die Spitze des Dorns in Richtung des Einlasses weist. Die Anstellung des Dorns in Richtung des Einlasses erleichtert die Perforation einer sich ausbildenden und aufgrund einer Erwärmung aufsteigenden Haut. Vorzugsweise beträgt der Neigungswinkel α (alpha) der Längsachse A gegenüber der Innenumfangsfläche < 60°, weiterhin vorzugsweise < 50°, besonders bevorzugt < 45°. Je steiler der Dorn angestellt ist, desto leichter kommt es zu der gewünschten Perforation der aufsteigenden Haut. Ferner bleibt ein ausreichender freier Strömungsquerschnitt für die zu applizierende Flüssigkeit erhalten.

Die Geometrie des Dorns kann beliebig gestaltet sein. Beispielsweise kann der Dorn kontinuierlich spitz zulaufend oder endseitig spitz zulaufend ausgebildet sein. Eine kontinuierlich spitz zulaufende Geometrie kann beispielsweise über eine Kegelform des Dorns geschaffen werden. Die Kegelform weist zudem den Vorteil auf, dass eine stabile Verbindung des Dorns mit dem Körper des Tropfereinsatzes über eine breite Basis des Dorns geschaffen wird.

Bei einer kegelförmigen Geometrie weist der Dorn einen stabförmige oder kreisförmigen Querschnitt auf. Alternativ zu einem im Querschnitt kreisrund ausgebildeten Dorn kann aber auch ein Dorn vorgesehen sein, der im Querschnitt flach, elliptisch oder winkelförmig ausgebildet ist. Ein flacher Querschnitt kann zur Ausbildung der Spitze des Dorns wiederum kontinuierlich spitz zulaufend oder lediglich endseitig spitz zulaufend ausgebildet sein, so dass sich in der Seitenansicht ein dreieckiger oder giebelförmiger Dorn ergibt. Bei einem Winkelförmigen Querschnitt gilt analog das Gleiche. Der winkelförmige Querschnitt weist gegenüber einem flachen Querschnitt den Vorteil einer höheren Steifigkeit und damit einer erhöhten Stabilität auf. Der Dorn kann kegelförmig mit mittiger oder seitlicher Spitze als auch als spitzer Tropfen ausgebildet sein.

Vorteilhafterweise weist die Innenumfangsfläche des Körpers mehrere in den Kanal hineinragende Dornen auf. Mehrere Dornen erhöhen die Sicherheit, da eine aufsteigende Haut gleich mehrfach perforiert und damit sicher zerstört wird. Vorzugsweise sind die mehreren Dornen in einer gemeinsamen Radialebene angeordnet und bilden einen Dornenkreis aus. Die Spitzen der im Dornenkreis angeordneten Dornen gelangen somit im Wesentlichen zeitgleich in Kontakt mit der Haut, wenn diese im Kanal aufsteigt. Dadurch ist gewährleistet, dass jede Spitze eines Dorns die Haut sicher durchdringt. Des Weiteren bevorzugt sind die mehreren Dornen eines Dornenkreises in gleichem Winkelabstand zueinander angeordnet, so dass die Haut in etwa gleich große Stücke zerrissen wird, wenn sie in den Bereich des Dornenkreises gelangt. Ferner bilden die in gleichem Winkelabstand zueinander angeordneten Dornen über den Umfang gleichmäßig verteilte Widerhaken aus, an denen die Haut bzw. Hautteile hängen bleiben.

Des Weiteren wird vorgeschlagen, dass mehrere Dornen oder Dornenkreise in einem axialen Abstand zueinander angeordnet sind. Die nachfolgenden Dornen bzw. Dornenkreise fangen Hautteile ab, die durch die vorhergehenden nicht zurückgehalten werden konnten. Von Vorteil erweist sich dabei eine Verjüngung des Kanals in Richtung des Auslasses, da in diesem Fall die Spitzen der nachfolgenden Dornen bzw. Dornenkreise nach radial innen versetzt zu liegen kommen.

Alternativ oder ergänzend wird vorgeschlagen, dass die Dornen eines Dornenkreises in ihrer Winkellage versetzt zu den Dornen eines benachbarten weiteren Dornenkreises angeordnet sind. Der Versatz entspricht vorzugsweise einem halben Winkelabstand, so dass die Dornen eines Dornenkreises jeweils mittig in Bezug auf eine Lücke zwischen zwei Dornen des benachbarten Dornenkreises zu liegen kommen. Eine aufsteigende Haut wird auf diese Weise sehr engmaschig perforiert und zudem sicher abgefangen.

Bevorzugt ist innerhalb des den Körper durchsetzenden Kanals mindestens ein ringförmiger Absatz ausgebildet. Über einen mindestens einen ringförmigen Absatz kann eine stufenweise Vergrößerung oder Verkleinerung des Kanaldurchmessers bewirkt werden. Der Absatz trennt daher bevorzugt zwei aufeinanderfolgende Kanalabschnitte.

Als weiterbildende Maßnahme wird vorgeschlagen, dass der ringförmige Absatz radial innen von einem umlaufenden oder in Umfangsrichtung ein- oder mehrfach unterbrochenen Grat begrenzt wird, der in Richtung des Einlasses weist. Dies ist nur möglich, wenn auch der Absatz in Richtung des Einlasses orientiert ist. Das heißt, dass der mindestens eine Absatz der Verkleinerung des Kanaldurchmessers dient. Vorzugsweise ist radial innen am Absatz ein Grat ausgebildet, der vorzugsweise zwei in einem spitzen Winkel zulaufende Flanken aufweist, so dass eine scharfe Kante ausgebildet wird, die auf eine im Kanal aufsteigende Haut zerstörerisch wirkt. Der Grat unterstützt demnach die Funktion des mindestens einen in den Kanal hineinragenden Dorns.

Der mindestens eine Grat kann dem mindestens einen Dorn vor- oder nachgelagert sein. Ein nachgelagerter Grat kann zudem als Hautfänger eingesetzt werden, so dass sich von dem Dorn bzw. von den Dornen lösende Hautteile vom Auslass sicher ferngehalten werden.

Ferner können mehrere ringförmige Absätze innerhalb des Kanals ausgebildet sein, die jeweils radial innen von einem umlaufenden oder in Umfangsrichtung ein- oder mehrfach unterbrochen Grat, der vorzugsweise in Richtung des Einlasses zeigt, begrenzt werden. In diesem Fall kann ein erster Grat dem Dorn bzw. den Dornen vorgelagert und ein weiterer Grat dem Dorn bzw. den Dornen nachgelagert sein. Die Kante des mindestens einen Grates zeigt vorzugsweise in Richtung des Einlasses des Kanals.

Der Auslass des Kanals wird bevorzugt von einer ringförmigen Stirnfläche des Körpers begrenzt, die gemeinsam mit einer Außenumfangsfläche des Körpers eine Tropfenabrisskante ausbildet. Wird der Tropfereinsatz mit einem Behälter verbunden und soweit in Schräglage gebracht, dass der Einlass oberhalb des Auslasses zu liegen kommt, läuft die zu applizierende Flüssigkeit aus dem Behälter in den Kanal und über den Auslass auf die Stirnfläche, von welcher die Flüssigkeit schließlich abtropft. Bei höher viskosen Flüssigkeiten kann das Abtropfen durch Zusammendrücken des Behälters unterstützt werden. Vorzugsweise ist der den Auslass definierende Abschnitt des Kanals trichterförmig ausgebildet, so dass sich der Kanaldurchmesser zum Auslass hin erweitert. Die den trichterförmigen Abschnitt begrenzende Innenumfangsfläche des Körpers und die Stirnfläche umschließen demnach bevorzugt einen stumpfen Winkel. Eine derartige Geometrie des Auslasses weist den Vorteil auf, dass je nach Schräglage des Tropfereinsatzes bzw. des Behälters mit dem Tropfereinsatz die Tropfengröße steuerbar ist. Der Tropfwinkel bestimmt demnach die Tropfengröße. Tropfversuche mit einem Dentaladhäsiv, wobei es sich um iBOND Self Etch, einem lichthärtenden, selbstätzenden Einkomponenten-Adhäsiv der Heraeus Kulzer GmbH handelte, haben dies bestätigt. Bei einer Schräglage von 45° betrug beispielsweise das Tropfengewicht 0,018 g. Wurde der Tropfereinsatz in eine lotrechte Kopfüberlage gebracht, konnte ein Tropfengewicht von 0,023 g erreicht werden.

Um ein sicheres Abtropfen der Flüssigkeit von der Tropfenabrisskante zu gewährleisten, wird vorgeschlagen, dass die Stirnfläche und die Außenumfangsfläche des Körpers gemeinsam einen Winkel β (beta) < 90°, vorzugsweise < 70°, weiterhin vorzugsweise < 50° umschließen. Der spitze Winkel trägt dazu bei, dass keine Flüssigkeit hinter die Tropfenabrisskante gelangt und außen am Tropfereinsatz abläuft, wenn die Applikation der Flüssigkeit beendet ist und der Behälter einschließlich Tropfereinsatz wieder in seine Ausgangslage gebracht wird. Die gemeinsam mit der Stirnfläche die Tropfenabrisskante ausbildende Außenumfangsfläche des Körpers ist hierzu bevorzugt - zumindest im Bereich des Auslasses - trichterförmig ausgebildet.

Weiterhin bevorzugt bildet der Körper einlassseitig einen Stutzen aus, über den der Tropfereinsatz mit einem Behälter, insbesondere mit einem flaschenähnlichen Behälter, verbindbar ist. Vorzugsweise wird der Stutzen in den Flaschenhals des Behälters eingesetzt, insbesondere eingepresst. Der Presssitz kann beispielsweise durch ein radiales Übermaß des Stutzens gegenüber dem Flaschenhals und/oder durch mindestens ein ringförmiges Dichtelement außenumfangseitig am Stutzen bewirkt werden. Der Presssitz gewährleistet eine fluiddichte Verbindung. Weitere Möglichkeiten eine fluiddichte Verbindung herzustellen wären z.B. das Verschweißen von Tropfeinsatz mit dem Behälter durch Ultraschall oder Laser.

Als weiterbildende Maßnahme wird vorgeschlagen, dass außenumfangseitig am Stutzen ein Einführkonus ausgebildet ist, der das Einführen bzw. Einsetzen des Stutzens in den Behälter erleichtert. Alternativ oder ergänzend wird vorgeschlagen, dass außenumfangseitig am Stutzen ein Ringbund ausgebildet ist. Über den Ringbund vermag sich der Tropfereinsatz am Flaschenhals abzustützen.

Vorteilhafterweise ist der Tropfereinsatz ganz oder teilweise aus Kunststoff, insbesondere aus Polyethylen, gefertigt. Der Tropfereinsatz lässt sich auf diese Weise, zum Beispiel als Spritzgussteil, kostengünstig herstellen. Der mindestens eine Dorn kann in einem Arbeitsschritt mit dem Tropfereinsatz hergestellt oder nachträglich mit Kunststoff angespritzt werden. Die einstückige Verbindung des Dorns mit dem Tropfereinsatz gewährleistet eine hohe Stabilität. Ebenso bietet der Werkstoff die Möglichkeit die Dornen bei der Herstellung "Zwangs zu entformen" auf Grund des elastischen Verhaltens des verwendeten Materials zur Herstellung des Tropfeinsatzes und/oder der Dornen. Darüber hinaus ist das verwendete Material inert gegenüber Chemikalien und wird nicht von diesen angegriffen.
Da der Tropfereinsatz in der Regel in Kombination mit einem Behälter zum Einsatz gelangt, wird ferner ein Behälter zur Bevorratung einer Flüssigkeit für den dentalen Bereich mit einem erfindungsgemäßen Tropfereinsatz zur tropfenförmigen Applikation der im Behälter bevorrateten Flüssigkeit beansprucht. Vorzugsweise ist der Behälter als Flasche ausgebildet. Die mittels eines Tropfereinsatzes zu applizierende dentale Flüssigkeiten, insbesondere Dentaladhäsive, werden in der Regel in Flaschen bereitgestellt.

Bevorzugte Ausführungsformen eines erfindungsgemäßen Tropfereinsatzes werden nachfolgend anhand der beigefügten Figuren näher erläutert ohne die Erfindung auf diese Ausführungsformen zu begrenzen. Die Figuren zeigen:
Fig. 1 einen schematischen Längsschnitt durch einen erfindungsgemäßen Tropfereinsatz gemäß einer bevorzugten Ausführungsform,
Fig. 2a) einen Querschnitt und b) eine Seitenansicht einer zweiten bevorzugten Dornengeometrie,
Fig. 3a) einen Querschnitt und b) eine Seitenansicht einer dritten bevorzugten Dornengeometrie und
Fig. 4a) einen Querschnitt und b) eine Seitenansicht einer vierten bevorzugten Dornengeometrie.

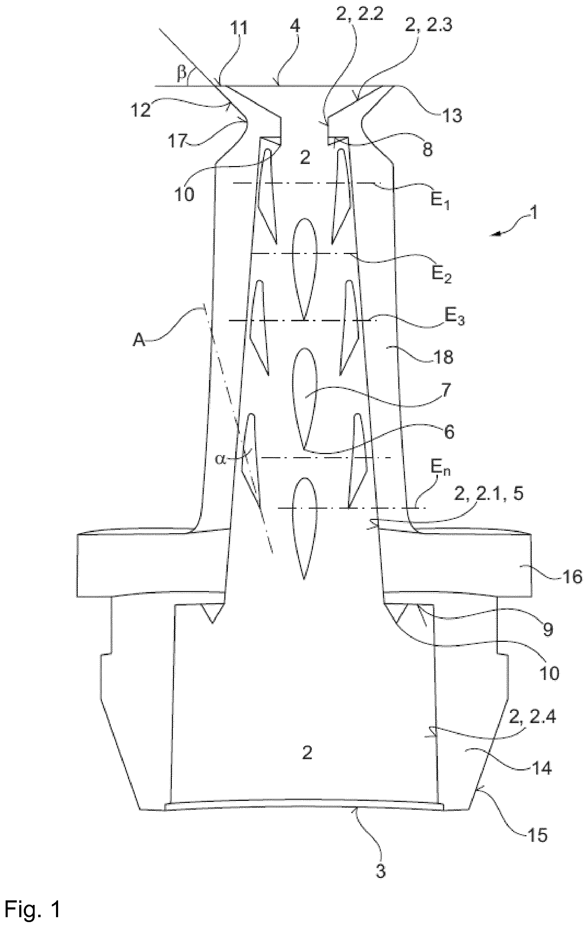

Dem schematischen Längsschnitt der **Fig. 1** ist ein erfindungsgemäßer Tropfereinsatz zu entnehmen, der zur tropfenweisen Applikation einer Dentalflüssigkeit, die in einem Behälter in Form einer Flasche bevorratet ist, mit dem Behälter bzw. mit der Flasche verbindbar ist.

Der dargestellte Tropfereinsatz weist einen im Wesentlichen rotationssymmetrisch ausgebildeten Körper **1** auf. An seinem unteren Ende bildet der Körper **1** einen Stutzen **14** zur Verbindung mit der Flasche aus. Der Stutzen **14** ist derart bemessen, dass er in den Hals der Flasche einsetzbar bzw. einpressbar ist. Um das Einsetzen zu erleichtern, weist der Stutzen **14** endseitig einen Einführkonus **15** auf. Der Einführkonus **15** geht in einen Außenumfangsabschnitt des Stutzens **14** über, der zur Herstellung einer Pressverbindung gegenüber dem Innendurchmesser des Flaschenhalses ein radiales Übermaß besitzt. In einem gewissen axialen Abstand hierzu ist außenumfangseitig am Stutzen **14** ein Ringbund **16** ausgebildet, der die maximale Einpresstiefe des Tropfereinsatzes vorgibt. Zugleich kann sich der Tropfereinsatz über den Ringbund **16** am Flaschenhals abstützen.

An den Stutzen **14** schließt sich ein rohrförmiger Abschnitt **18** des Körpers **1** an, der an seinem dem Stutzen **14** abgewandten Ende eine Einschnürung **17** besitzt, so dass ein trichterförmiger Endabschnitt ausgebildet wird. Der rohrförmige Abschnitt **18** des Körpers **1** weist einen deutlich geringeren Außendurchmesser als der Stutzen **14** auf. In axialer Richtung ist der rohrförmige Abschnitt **18** deutlich länger als der Stutzen **14** ausgebildet. Der rohrförmige Abschnitt **18** formt auf diese Weise eine Art Rüssel.

Der Körper **1** wird über seine gesamte Länge von einem Kanal **2** durchsetzt, der einen Einlass **3** und einen Auslass **4** definiert. Zwischen dem Einlass **3** und dem Auslass **4** ist der Kanal **2** in mehrere Abschnitte **2.1, 2.2, 2.3, 2.4** unterteilt, die sich hinsichtlich ihrer Durchmesser unterscheiden. Den größten Durchmesser weist ein Abschnitt **2.4** des Kanals **2** auf, der innerhalb des Stutzens **14** ausgebildet ist und den Einlass **3** definiert. Der Abschnitt **2.4** geht über einen ringförmigen Absatz **9** in einen Abschnitt **2.1** über, der gegenüber dem Abschnitt **2.4** einen verringerten Durchmesser besitzt. Zudem nimmt der Durchmesser des Abschnitts **2.1** in Richtung eines weiteren ringförmigen Absatzes **8** kontinuierlich ab. An den Abschnitt **2.1** schließt sich ein Abschnitt **2.2** an, der den kleinsten Durchmesser besitzt und eine Art Blende ausbildet. Über den Abschnitt **2.2** geht der Kanal **2** in einen sich trichterförmig erweiternden Abschnitt **2.3** über, der den Auslass **4** definiert.

Der Abschnitt **2.1** wird von einer Innenumfangsfläche **5** des Körpers **1** begrenzt, von der sich jeweils in einer Spitze **6** endende Dornen **7** in den Kanal **2** hinein erstrecken. Zur Ausbildung der Spitzen **6** weisen die Dornen **7** des Tropfereinsatzes der Fig. 1 eine kegelförmige Geometrie auf. Jeder Dorn **7** weist zudem eine gegenüber der Innenumfangsfläche **5** um den Neigungswinkel α geneigte Längsachse **A** auf, so dass die Spitze **6** des Dorns **7** in Richtung des Einlasses **3** weist. Mehrere in einer Radialebene E₁, E₂, E₃...Eₙ angeordnete Dornen **7** bilden jeweils einen Dornenkreis aus, wobei die Dornen **7** eines nachfolgenden Dornenkreises jeweils um einen halben Winkelabstand versetzt zu den Dornen **7** des vorhergehenden Dornenkreises angeordnet sind.

Die Dornen **7** besitzen die Aufgabe, eine Blasenbildung zu verhindern. Denn insbesondere bei der Verwendung einer acetonhaltigen Dentalflüssigkeit besteht regelmäßig das Problem, dass die Flüssigkeit eine Haut bildet, die bei Erwärmung in den Kanal **2** des Tropfereinsatzes aufsteigt und im Bereich des Auslasses **4** eine Blase bildet. Bläht sich die Blase am Auslass **4** soweit auf, bis sie zerplatzt, führt dies zu einer Verunreinigung des Tropfereinsatzes. Die im Abschnitt **2.1** des Kanals **2** vorgesehenen Dornen **7** jedoch perforieren und zerreißen die Haut, so dass es gar nicht erst zur Blasenbildung im Bereich des Auslasses **4** kommt. Auf diese Weise werden Verunreinigungen des Tropfereinsatzes verhindert. Zudem halten die Dornen **7** die Haut bzw. Hautteile zurück, so dass weiterhin eine exakte Tropfenbildung im Bereich des Auslasses **4** gewährleistet ist.

Neben den Dornen **7** im Abschnitt **2.1** des Kanals **2** weist der Tropfereinsatz Grate **10** auf, die radial innen liegend an den ringförmigen Absätzen **8, 9** ausgebildet sind. Sie wirken ebenfalls einer Blasenbildung entgegen. Die Grate **10** sind in Umfangsrichtung mehrfach unterbrochen, so dass die Dentalflüssigkeit zwischen den Graten **10** hindurch zu fließen vermag. Die Haut bzw. Hautteile werden jedoch durch die Grate **10** zurückgehalten.

Um eine exakte Tropfenbildung und ein sauberes Abtropfen zu gewährleisten, wird der Auslass **4** durch eine Stirnfläche **11** des Körpers **1** begrenzt, die gemeinsam mit einer Außenumfangsfläche **12** des Körpers **1** einen Winkel β umschließt, der vorliegend 45° beträgt. Auf diese Weise bilden die Stirnfläche **11** und die Außenumfangsfläche **12** eine Tropfenabrisskante **13** aus, die verhindert, dass die Dentalflüssigkeit hinter die Tropfenabrisskante **13** gelangt und außen am Tropfereinsatz abläuft. Die Außenumfangfläche **12** ist hierzu ebenfalls trichterförmig geformt, wobei sich die Trichterform aufgrund der Einschnürung **17** ergibt.

Die in der **Fig. 1** dargestellte Geometrie des Körpers 1 im Bereich des Auslasses **4** weist ferner den Vorteil auf, dass die Tropfengröße über die Schräglage des Tropfereinsatzes steuerbar ist. Wird der Tropfereinsatz lotrecht kopfüber gehalten, bilden sich im Vergleich zu einer aus der lotrechten Lage gekippten Schräglage des Tropfereinsatzes größere Tropfen aus.

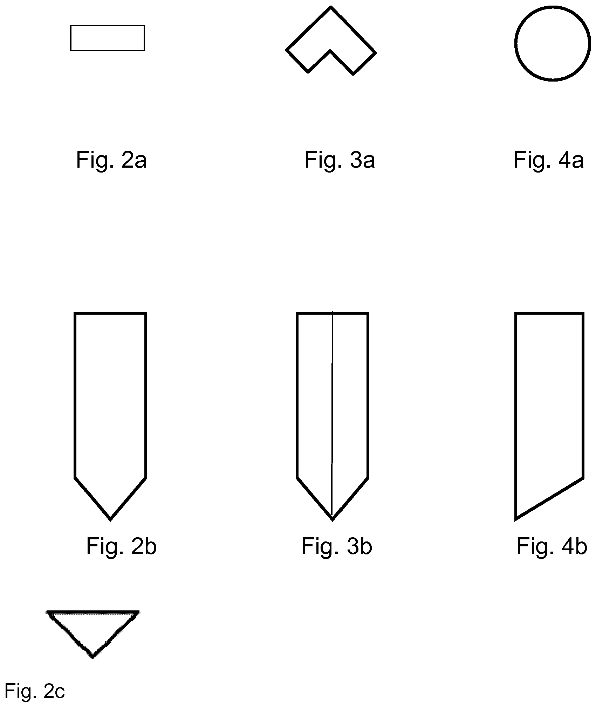

In der **Fig. 1** weist der Tropfereinsatz kegelförmige Dornen **7** auf. Darüber hinaus können die Dornen **7** jedoch auch andere Geometrien aufweisen. Beispiele sind in den **Figuren 2** bis **4** dargestellt.

Beispielsweise können die Dornen **7** auch einen flachen Querschnitt besitzen (siehe **Fig. 2a**). Zur Ausbildung der Spitze **6** kann ein flacher Dorn **7** kontinuierlich oder lediglich endseitig spitz zulaufen (siehe **Fig**. **2b**). Fig. 2c zeigt die Ansicht von unten auf den Dorn.

Ferner können die Dornen **7** einen winkelförmigen Querschnitt besitzen (siehe **Fig. 3a**). Zur Ausbildung der Spitze kann auch ein winkelförmiger Dorn **7** kontinuierlich oder lediglich endseitig spitz zulaufen (siehe **Fig. 3b**).

In der **Fig. 4** ist eine weitere Variante einer möglichen Dornengeometrie dargestellt. Hier ist der Querschnitt wiederum kreisförmig gewählt (siehe **Fig. 4a**). Die Spitze **6** wird durch einen endseitigen schrägen Anschnitt des Dorns **7** gebildet (siehe **Fig. 4b**). Der Dorn der Figur 4 kann alternativ als Kegel mit mittiger Spitze sowie mit einer seitlich gegenüber der Mitte des Kreises versetzten Spitze ausgebildet sein.

### Bezugszeichenliste

- 1: Körper
- 2: Kanal
- 3: Einlass
- 4: Auslass
- 5: Innenumfangsfläche des Körpers 1
- 6: Spitze
- 7: Dorn
- 8: Absatz
- 9: Absatz
- 10: Grat
- 11: Stirnfläche des Körpers 1
- 12: Außenumfangsfläche des Körpers 1
- 13: Tropfenabrisskante
- 14: Stutzen
- 15: Einführkonus
- 16: Ringbund
- 17: Einschnürung
- 18: Rohrförmiger Abschnitt des Körpers 1

## Patentansprüche

1. Tropfereinsatz zur tropfenförmigen Applikation einer in einem Behälter bevorrateten Flüssigkeit für den dentalen Bereich, umfassend einen Körper (1), der im Wesentlichen rotationssymmetrisch ausgebildet und in axialer Richtung von einem Kanal (2) durchsetzt ist, der einen Einlass (3) und einen Auslass (4) für die Flüssigkeit definiert, **dadurch gekennzeichnet, dass**
eine den Kanal (2) begrenzende Innenumfangsfläche (5) des Körpers (1) mindestens einen in den Kanal (2) hineinragenden und in einer Spitze (6) endenden Dorn (7) aufweist.

2. Tropfereinsatz nach Anspruch 1, **dadurch gekennzeichnet, dass** der Kanal (2) in mehrere Abschnitte (2.1, 2.2, 2.3, 2.4) unterteilt ist und die den Dorn (7) aufweisende Innenumfangsfläche (5) des Körpers (1) einen Abschnitt (2.1) des Kanals (2) begrenzt, an den sich in Richtung des Auslasses (4) mindestens ein weiterer Abschnitt (2.2, 2.3) anschließt.

3. Tropfereinsatz nach Anspruch 2, **dadurch gekennzeichnet, dass** sich der Abschnitt (2.1) des Kanals (2) in Richtung des Auslasses (4) verjüngt und/oder der Abschnitt (2.1) mittelbar über mindestens einen weiteren Abschnitt (2.2), der einen verringerten Durchmesser besitzt, in einen den Auslass (4) definierenden Abschnitt (2.3) des Kanals (2) übergeht, wobei vorzugsweise der den Auslass (4) definierende Abschnitt (2.3) sich in Richtung des Auslasses (4) trichterförmig erweitert.

4. Tropfereinsatz nach einem der vorhergehenden Ansprüche, **dadurch gekennzeichnet, dass** der Dorn (7) eine Längsachse (A) aufweist, die gegenüber der Innenumfangsfläche (5) geneigt ist, so dass die Spitze (6) des Dorns (7) in Richtung des Einlasses (3) weist, wobei vorzugsweise der Neigungswinkel (α) < 60°, weiterhin vorzugsweise < 50°, besonders bevorzugt < 45° beträgt.

5. Tropfereinsatz nach einem der vorhergehenden Ansprüche, **dadurch gekennzeichnet, dass** der Dorn (7) kontinuierlich spitz zulaufend oder endseitig spitz zulaufend ausgebildet ist.

6. Tropfereinsatz nach einem der vorhergehenden Ansprüche, **dadurch gekennzeichnet, dass** der Dorn (7) im Querschnitt flach, winkelförmig, stabförmig, oval oder kreisförmig ausgebildet ist.

7. Tropfereinsatz nach einem der vorhergehenden Ansprüche, **dadurch gekennzeichnet, dass** mehrere Dornen (7), vorzugsweise in gleichem Winkelabstand zueinander, in einer gemeinsamen Radialebene (E) angeordnet sind, und einen Dornenkreis ausbilden.

8. Tropfereinsatz nach einem der vorhergehenden Ansprüche, **dadurch gekennzeichnet, dass** mehrere Dornen (7) oder Dornenkreise in einem axialen Abstand zueinander angeordnet sind, wobei vorzugsweise die Dornen (7) eines Dornenkreises in ihrer Winkellage versetzt zu den Dornen (7) eines benachbarten weiteren Dornenkreises angeordnet sind.

9. Tropfereinsatz nach einem der vorhergehenden Ansprüche, **dadurch gekennzeichnet, dass** innerhalb des Kanals (2) mindestens ein ringförmiger Absatz (8, 9) ausgebildet ist, der vorzugsweise radial innen von einem umlaufenden oder in Umfangsrichtung ein- oder mehrfach unterbrochenen Grat (10) begrenzt wird, der in Richtung des Einlasses (3) weist.

10. Tropfereinsatz nach einem der vorhergehenden Ansprüche, **dadurch gekennzeichnet, dass** der Auslass (4) von einer ringförmigen Stirnfläche (11) des Körpers (1) begrenzt wird, die gemeinsam mit einer Außenumfangsfläche (12) des Körpers (1) eine Tropfenabrisskante (13) ausbildet.

11. Tropfereinsatz nach Anspruch 10, **dadurch gekennzeichnet, dass** die Stirnfläche (11) und die Außenumfangsfläche (12) des Körpers (1) gemeinsam einen Winkel (β) < 90°, vorzugsweise < 70°, weiterhin vorzugsweise < 50° umschließen.

12. Tropfereinsatz nach einem der vorhergehenden Ansprüche, **dadurch gekennzeichnet, dass** der Körper (1) einlassseitig einen Stutzen (14) ausbildet, über den der Tropfereinsatz mit einem Behälter, insbesondere mit einem flaschenähnlichen Behälter, verbindbar ist.

13. Tropfereinsatz nach Anspruch 12, **dadurch gekennzeichnet, dass** außenumfangseitig am Stutzen (14) ein Einführkonus (15) und/oder ein Ringbund (16) ausgebildet ist bzw. sind.

14. Tropfereinsatz nach einem der vorhergehenden Ansprüche, **dadurch gekennzeichnet, dass** dieser ganz oder teilweise aus Kunststoff, insbesondere aus Polyethylen, gefertigt ist.

15. Behälter zur Bevorratung einer Flüssigkeit für den dentalen Bereich mit einem Tropfereinsatz nach einem der vorhergehenden Ansprüche zur tropfenförmigen Applikation der im Behälter bevorrateten Flüssigkeit, wobei vorzugsweise der Behälter als Flasche ausgebildet ist.

## Claims

1. Dropper insert for drop-shaped application of a liquid for the dental sector, stored in a container, comprising a body (1) being substantially rotationally symmetrical and being penetrated in axial direction by a channel (2), which defines an inlet (3) and an outlet (4) for the liquid,
**characterised in that**
an inner peripheral surface (5) of the body (1), delimiting the channel (2), has at least one pin (7) extending into the channel (2) and ending in a tip (6).

2. Dropper insert according to claim 1, **characterised in that**
the channel is subdivided into several sections (2.1, 2.2, 2.3, 2.4) and the inner peripheral surface (5) of the body (1), having the pin (7), delimits a section (2.1) of the channel (2), to which at least one further section (2.2, 2.3) is attached in the direction of the outlet (4).

3. Dropper insert according to claim 2, **characterised in that**
the section (2.1) of the channel (2) tapers towards the outlet (4) and/or the section (2.1) passes indirectly via at least one further section (2.2) having a reduced diameter into a section (2.3) of the channel (2), defining the outlet (4), the section (2.3) defining the outlet (4) preferably widening funnel-shaped towards the outlet (4).

4. Dropper insert according to any one of the preceding claims, **characterised in that** the pin (7) has a longitudinal axis (A) being inclined relative to the inner peripheral surface (5) so that the tip (6) of the pin (7) points towards the inlet (3), the inclination angle (α) is preferably < 60°, further preferably < 50°, particularly preferably < 45°.

5. Dropper insert according to any one of the preceding claims, **characterised in that** the pin (7) is pointed continuously or pointed at the ends.

6. Dropper insert according to any one of the preceding claims, **characterised in that** the pin (7), in cross section, is flat, angled, rod-shaped, oval or circular.

7. Dropper insert according to any one of the preceding claims, **characterised in that** several pins (7) are arranged in a common radial plane (E), preferably in the same angular distance to each other, and form a circle of pins.

8. Dropper insert according to any one of the preceding claims, **characterised in that** several pins (7) or circles of pins are arranged in an axial distance to each other, the pins (7) of one circle of pins being preferably staggered in their angular position relative to the pins (7) of an adjacent further circle of pins.

9. Dropper insert according to any one of the preceding claims, **characterised in that** an annular platform (8, 9) is formed inside the channel (2), which preferably is radially delimited at the inside by a burr (10) being circumferential or being single- or multiple-interrupted in the peripheral direction, which points in the direction of the inlet (3).

10. Dropper insert according to any one of the preceding claims, **characterised in that** the outlet (4) is delimited by an annular front surface (11) of the body (1), which forms a drop tear-off edge (13) together with an outer peripheral surface (12) of the body (1).

11. Dropper insert according to claim 10, **characterised in that** the front surface (11) and the outer peripheral surface (12) of the body (1), in common, enclose an angle (β) < 90°, preferably < 70°, further preferably < 50°.

12. Dropper insert according to any one of the preceding claims, **characterised in that** the body (1) forms a fitting (14) at the inlet-side, by means of which the dropper insert is connectable to a container, in particular to a bottle-like container.

13. Dropper insert according to claim 12, **characterised in that** an insertion cone (15) and/or an annular collar (16) is or are formed at the outer peripheral surface-side at the socket (14).

14. Dropper insert according to any one of the preceding claims, **characterised in** being completely or partially produced from plastic, in particular from polyethylene.

15. Container for storage of a liquid for the dental sector having a dropper insert according to any one of the preceding claims for drop-shaped application of the liquid stored in the container, the container preferably being a bottle.

## Revendications

1. Insert compte-gouttes pour l'application sous forme de gouttes d'un liquide pour le secteur dentaire, stocké dans un récipient, comprenant un corps (1) étant essentiellement formé à symétrie de révolution et étant pénétré dans la direction axiale d'un canal (2), qui définit une entrée (3) et une sortie (4) pour le liquide,
**caractérisé en ce qu'**
une surface périphérique intérieure (5) du corps (1), délimitant le canal (2), a au moins une broche (7) étendant dans le canal (2) et se terminant par une pointe (6).

2. Insert compte-gouttes selon la revendication 1, **caractérisé en ce que**
le canal est subdivisé en plusieurs sections (2.1, 2.2, 2.3, 2.4) et la surface périphérique intérieure (5) du corps (1), ayant la broche (7), délimite une section (2.1) du canal (2), á laquelle au moins une autre section (2.2, 2.3) est attachée à la direction de la sortie (4).

3. Insert compte-gouttes selon la revendication 2, **caractérisé en ce que**
la section (2.1) du canal (2) effile vers la sortie (4) et/ou la section (2.1) passe indirectement via au moins une autre section (2.2) ayant un diamètre réduit à un section (2.3) du canal (2), définissant la sortie (4), la section (2.3) définissant la sortie (4) de préférence élargissant en forme d'entonnoir vers la sortie (4).

4. Insert compte-gouttes selon l'une des revendications précédentes, **caractérisé en ce que** la broche (7) a un axe longitudinal (A) étant incliné relatif à la surface périphérique intérieure (5) de sorte que la pointe (6) de la broche (7) montre vers l'entrée (3), l'angle d'inclinaison (α) est de préférence < 60°, en outre de préférence < 50°, de préférence particulière < 45°.

5. Insert compte-gouttes selon l'une des revendications précédentes, **caractérisé en ce que** la broche (7) est pointue continûment ou pointue à la fin.

6. Insert compte-gouttes selon l'une des revendications précédentes, **caractérisé en ce que** la broche (7), en coupe transversale, et plate, angulaire, en forme de tige, ovale ou circulaire.

7. Insert compte-gouttes selon l'une des revendications précédentes, **caractérisé en ce que** plusieurs broches sont disposées dans un plan radial commun (E), de préférence à la même distance angulaire l'un de l'autre, et forment un cercle de broches.

8. Insert compte-gouttes selon l'une des revendications précédentes, **caractérisé en ce que** plusieurs broches (7) ou des cercles de broches sont disposés à une distance axiale l'un de l'autre, les broches (7) de l'un cercle de broches étant de préférence disposées en déport dans leur position angulaire relative aux broches (7) d'un autre cercle de broches adjacent.

9. Insert compte-gouttes selon l'une des revendications précédentes, **caractérisé en ce que** un épaulement annulaire (8, 9) est formé à l'intérieur du canal (2), qui de préférence est délimité radialement à l'intérieur par une bavure (10) étant circonférentielle ou étant interrompue une fois ou plusieurs fois dans la direction périphérique, qui montre à la direction de l'entrée (3).

10. Insert compte-gouttes selon l'une des revendications précédentes, **caractérisé en ce que** la sortie (4) est délimitée par une surface frontale annulaire (11) du corps (1), qui forme un bord d'interruption de gouttes (13) conjointement avec une surface périphérique extérieure (12) du corps (1).

11. Insert compte-gouttes selon la revendication 10, **caractérisé en ce que** la surface frontale (11) et la surface périphérique extérieure (12) du corps (1), en commun, comportent un angle (β) < 90°, de préférence < 70°, en outre de préférence < 50°.

12. Insert compte-gouttes selon l'une des revendications précédentes, **caractérisé en ce que** le corps (1) forme un raccord (14) au côté d'entrée, au moyen duquel l'insert compte-gouttes est connectable à un récipient, en particulier à un récipient à la manière d'une bouteille.

13. Insert compte-gouttes selon la revendication 12, **caractérisé en ce qu'**un cône d'insertion (15) et/ou un collet annulaire (16) est ou sont formé(s) au côté de surface périphérique extérieure au raccord (14).

14. Insert compte-gouttes selon l'une des revendications précédentes, caractérisé en étant complètement ou partiellement produit à partir du plastique, en particulier à partir du polyéthylène.

15. Récipient pout le stockage d'un liquide pour le secteur dentaire ayant un insert selon l'une des revendications précédentes pour l'application sous forme de gouttes du liquide stocké dans le récipient, le récipient de préférence étant une bouteille.
